# FASCICULE DE BREVET EUROPEEN

(11) **EP 1 662 192 B1**
(45) Date de publication et mention de la délivrance du brevet: **20.08.2008**
(21) Numéro de dépôt: 05292509.6
(22) Date de dépôt: 25.11.2005
(51) Int. Cl.: F16M 11/00, B62D 65/02

(54) **Support surfacique de pièces notamment pour pièces de carrosserie de véhicules automobiles**
Unterstützung der Oberfläche eines Elements, insbesondere eines Autoblechteils
Support for a surface of an element, in particular for car panels

(30) Priorité: 26.11.2004 FR 0412590
(43) Date de publication de la demande: 31.05.2006
(73) Titulaire: COMPAGNIE PLASTIC OMNIUM, 69007 Lyon (FR)
(72) Inventeur: Brizin, Jérôme, 01100 Arbent (FR)
(74) Mandataire: Remy, Vincent Noel Paul

(56) Documents cités:
- WO-A-20/04082544
- GB-A- 2 119 239
- US-A- 3 745 998
- US-A- 5 515 975

## Description

### Domaine technique :

Equipement et reprise de pièces de carrosserie de véhicules automobiles et plus généralement de toutes pièces en matière plastique devant subir des traitements après leur fabrication.

### Etat de la technique :

II est connu que les pièces de carrosserie, notamment les boucliers de pare-chocs, doivent recevoir différents équipements qui y sont assujettis par des techniques d'assemblage telles que clipage, vissage, rivetage, agrafage. Ces traitements sont généralement à effectuer en fonction des commandes des utilisateurs finaux, au vu des options choisies par ces derniers.

Ainsi, un stock de boucliers de pare-chocs bruts, c'est-à-dire issus de moulage et peinture, sont traités individuellement pour recevoir des blocs optiques, des radars, des grilles d'entrée d'air etc...Chaque pièce étant peinte, elle doit être manipulée avec précaution et, en particulier, les efforts engendrés par la pose et l'assemblage des équipements ne doit pas entraîner de déformation de la pièce, ni de rayure de sa peinture.

Dans l'état de la technique, on utilise, comme support surfacique de pièces, une forme en résine polyuréthane qui est fabriquée sur mesure et qui possède une forme et un état de surface appropriés pour apporter les contre-réactions nécessaires au maintien en forme de la pièce sans dégradation.

### Problème posé par cet état de la technique :

Le support en résine polyuréthane est très coûteux. Il est en outre non réutilisable pour une autre forme de pièce, ce qui, au-delà des question de coût, nuit à la souplesse du poste d'assemblage.

### Solution proposée par l'invention :

On utilise un matelas immobilisateur à dépression du type de ceux utilisés en secourisme pour immobiliser des membres fracturés de personnes accidentées, tels que ceux décrits dans US 3745998 et WO 2004/082544 . Ces matelas comprennent une enveloppe étanche à l'air remplie de billes, généralement en polystyrène, et une valve qui permet d'aspirer l'air présent dans la poche.

L'utilisation du matelas est la suivante :
- On ouvre la valve pour mettre l'air présent à l'intérieur de la poche de se mettre à la pression atmosphérique,
- On pose un exemplaire de la pièce à traiter sur le matelas pour conformer ce dernier à ladite pièce,
- On aspire l'air présent dans la poche, laquelle se raidit et conserve la forme adaptée à la pièce.

Un nombre illimité de pièces peut ensuite se succéder sur le matelas ainsi conformé. Comme le support en résine polyuréthane de l'état de la technique, le support selon l'invention offre la contre-réaction nécessaire à la protection de la pièce pendant l'assemblage des différents équipements.

Un exemple de matelas immobilisateur à dépression est le modèle portant la référence 210 PU commercialisé par la société française PRIMATEC.

L'invention peut néanmoins être réalisée avec tout matelas à dépression répondant à la définition fournie par la revendication 1.

## Revendications

1. Utilisation, comme support surfacique de pièces de carrosserie de véhicule automobile, pour leur traitement de reprise et/ou d'équipement après moulage et éventuellement peinture, d'un matelas immobilisateur à dépression du type constitué par une enveloppe étanche à l'air remplie de billes, munie d'une valve permettant d'aspirer l'air présent dans l'enveloppe.

## Claims

1. The use, as a support surface for supporting motor vehicle bodywork parts for being re-worked and/or for fitting-out after molding and optionally for painting, of an immobilization vacuum mattress of the type constituted by an airtight envelope filled with beads and provided with a valve enabling the air present inside the envelope to be sucked out.

## Patentansprüche

1. Verwendung einer Unterdruck-Fixierungsmatte, welche aus einer luftdichten, mit Kugeln gefüllten Umhüllung besteht, die mit einem Ventil ausgerüstet ist, das ein Ansaugen der in der Umhüllung vorhandenen Luft gestattet, für die Halterung von Kraftfahrzeug-Karosserieteilen beim Vorgang des Auslagerns und/oder ihrer Weiterverarbeitung nach dem Ausformen und gegebenenfalls dem Lackieren.
